# FASCICULE DE BREVET EUROPEEN

(11) **EP 2 895 343 B1**
(45) Date de publication et mention de la délivrance du brevet: **09.11.2016**
(21) Numéro de dépôt: 13774743.2
(22) Date de dépôt: 12.09.2013
(51) Int. Cl.: B60H 1/00

(54) **ENSEMBLE DE CHAUFFAGE-CLIMATISATION COMPACT POUR VEHICULE AUTOMOBILE**
KOMPAKTE HEIZ- UND KLIMAEINHEIT FÜR KRAFTFAHRZEUGE
COMPACT HEATING/AIR-CONDITIONING UNIT FOR MOTOR VEHICLES

(30) Priorité: 13.09.2012 FR 1258600
(43) Date de publication de la demande: 22.07.2015
(73) Titulaire: Renault S.A.S., 92100 Boulogne-Billancourt (FR)
(72) Inventeur: MAYEUR, Gérard, F-76370 Ancourt (FR)
(86) Numéro de dépôt international: PCT/FR2013/052093
(87) Numéro de publication internationale: WO 2014/041304

(56) Documents cités:
- EP-A1- 1 279 530
- FR-A1- 2 742 383
- FR-A1- 2 959 451
- US-A1- 2002 000 313

## Description

La présente invention concerne un ensemble de chauffage-ventilation-climatisation pour véhicule automobile, généralement connu sous le sigle HVAC (« heating, ventilation, and air conditioning »).

Cet ensemble récupère l'air provenant de la « boîte à eau » qui, surmontée d'une grille d'auvent, collecte de l'air à la base du pare-brise et le dirige vers l'habitacle du véhicule via l'ensemble HVAC, après chauffage ou refroidissement le cas échéant.

On connaît, par exemple par FR 2 959 451, un ensemble comprenant un carter formant un volume clos entre une première et une seconde faces opposées destinées à être tournées respectivement du côté de l'habitacle du véhicule et du côté moteur du véhicule, le carter présentant au moins une ouverture d'entrée pour un flux d'air et plusieurs sorties de distribution d'air, des circulations étant définies à l'intérieur du carter entre l'ouverture d'entrée et les sorties, des clapets commandables étant interposés sur au moins certaines de ces circulations, le carter abritant un évaporateur situé sensiblement verticalement dans une circulation en aval de l'entrée, ainsi qu'au moins un organe de chauffage disposé dans une circulation en aval de l'évaporateur, un pulseur étant prévu pour faire circuler l'air dans le carter. Le pulseur est intégré dans le carter, en son centre et à sa partie supérieure arrière ; l'évaporateur et les organes de chauffage sont situés en partie basse du carter, tandis que les sorties de distribution sont placées devant le pulseur.

Cet ensemble HVAC occupe un volume important sous la planche de bord du véhicule et dans sa zone frontale. Ce volume contraint fortement le style de la planche de bord, alors que dans le même temps, on recherche aujourd'hui à libérer un maximum de place dans cette zone, pour offrir de nouveaux styles et augmenter l'espace libre dans l'habitacle, avec des prestations supplémentaires possible en termes de rangements par exemple.

Le but de l'invention est de proposer une nouvelle structure d'ensemble HVAC qui pallie, au moins en partie, ces inconvénients, et permette de réduire l'encombrement de l'ensemble HVAC, notamment dans l'axe longitudinal du véhicule, tout en restant compact dans les deux autres directions orthogonales.

L'invention atteint son but grâce à ensemble de chauffage-ventilation-climatisation pour véhicule automobile comprenant un carter formant un volume clos entre une première et une seconde faces opposées globalement verticales et destinées à être tournées respectivement du côté moteur du véhicule et du côté de l'habitacle du véhicule, le carter présentant au moins une ouverture d'entrée pour un flux d'air et, sur ou autour de la première face, plusieurs sorties de distribution d'air, des circulations d'air étant définies à l'intérieur du carter entre l'ouverture d'entrée et les sorties, des clapets commandables étant interposés sur au moins certaines de ces circulations, le carter abritant un évaporateur situé sensiblement verticalement dans une circulation en aval de l'entrée, ainsi qu'au moins un organe de chauffage disposé dans une circulation en aval de l'évaporateur, un pulseur étant prévu pour faire circuler l'air dans le carter, caractérisé en ce que :
- le pulseur est accolé latéralement au carter, raccordable à une source d'air (telle que la boîte à eau du véhicule) et relié à l'ouverture d'entrée du carter de façon à envoyer un flux d'air dans le carter, l'ouverture d'entrée étant placée sur la première face du carter en partie centrale,
- l'évaporateur est logé dans le carter derrière l'ouverture d'entrée et lui est relié par un manchon traversant partiellement le carter, une chambre arrière de circulation d'air étant formée à l'arrière de l'évaporateur entre ce dernier et la seconde face du carter,
- l'organe de chauffage est disposé sensiblement à plat au bas du carter, à l'aplomb du manchon et/ou de l'évaporateur, une chambre étant formée sous l'organe de chauffage et communiquant avec la chambre arrière de circulation par un premier passage arrière qui peut être fermé par un premier clapet commandable,
- une chambre de mixage et de distribution est formée sous le manchon traversant et au-dessus de l'organe de chauffage, en communication avec les sorties de distribution d'air, et communiquant avec la chambre arrière de circulation par un second passage arrière qui peut être fermé par un second clapet commandable.

Grâce à la disposition nouvelle combinée du pulseur extérieur latéral et de l'entrée d'air pulsé centrale se faisant sur la même face que celle qui a déjà les sorties d'aération, c'est-à-dire la face avant de l'ensemble, tournée du côté de l'habitacle, on arrive à donner une architecture plus compacte à l'ensemble. Par rapport à l'art antérieur cité plus haut, cela permet de remonter l'évaporateur et de loger en-dessous les organes de chauffage qui viennent donc moins en avant.

Il est à noter que le document US 2002/000313 fait connaître un ensemble HVAC dans lequel le module de chauffage est logé à plat sous l'évaporateur vertical, mais le reste de l'architecture de l'ensemble est assez éloigné de l'invention : en particulier, la position du pulseur n'est pas montrée dans le document et l'air arrive de toute façon du côté arrière de l'ensemble et non du côté avant comme dans la présente invention. Les trajets des circuits d'air sont également très différents du fait que la chambre de mixage selon ce document est prévue très haute et que l'air froid est dirigé directement vers cette sortie chambre de mixage supérieure, au lieu d'être ramené, selon l'invention, vers une chambre de mixage centrale située à l'avant du carter et donc mieux disposées par rapport aux diverses sorties d'aérateur.

Quand on dit plus haut dans la définition de l'invention que les deux faces du carter sont sensiblement verticales, cela désigne une orientation globale n'impliquant pas la planéité de ces deux faces, mais simplement une disposition générale, faisant qu'on peut définir une face clairement tournée d'un côté, par exemple le côté du compartiment moteur, et une autre face clairement tournée de l'autre, par exemple du côté de l'habitacle. De même, les dispositions respectivement verticale et horizontale de l'évaporateur et des organes de chauffage sont à prendre avec une certaine tolérance.

La chambre de mixage et de distribution communique avec des sorties supérieures de distribution d'air par des passages d'air verticaux formés de part et d'autre dudit manchon.

Lesdits passages d'air verticaux sont avantageusement doublés pour desservir de manière distincte des sorties supérieures d'aération et une sortie de désembuage.

Le pulseur, disposé latéralement, est relié à l'ouverture d'entrée du carter par un tuyau, de préférence par un tuyau plat.

Les organes de chauffage comprennent de préférence un aérotherme et un radiateur d'appoint. Ces deux éléments sont de préférence empilés l'un sur l'autre.

D'autres caractéristiques et avantages de l'invention ressortiront de la description suivante d'un exemple de réalisation. Il sera fait référence aux dessins annexés sur lesquels :
La figure 1 est une vue en perspective de l'ensemble HVAC de l'invention, vu du côté habitacle et de trois-quarts droite.
La figure 2 est une vue en perspective de l'ensemble HVAC de l'invention, vu du côté habitacle et de trois-quarts gauche.
La figure 3 est une vue en perspective de l'ensemble de la figure 1, sous un angle légèrement différent, et avec la visualisation des principaux flux d'air d'entrée et de distribution.
La figure 4 est une vue en perspective de l'ensemble de la figure 3, dont on a ôté le pulseur et la buse de distribution basse pour laisser voir, par transparence, les organes de chauffage.
La figure 5 est une vue schématique latérale de l'ensemble HVAC de l'invention montrant les flux d'air froid.
La figure 6 est la même vue schématique latérale montrant les flux d'air chaud.
La figure 7 est une vue schématique latérale illustrant le gain de place apporté par l'invention.

On a indiqué sur certaines figures le trièdre de référence XYZ du véhicule, X pointant vers la direction longitudinale arrière, Y la direction transversale et Z la direction verticale. L'ensemble HVAC étant situé sous la planche de bord entre l'habitacle et le compartiment moteur, on appellera ici « avant » de l'ensemble HVAC la direction X pointant vers l'habitacle (donc l'arrière du véhicule) et « arrière » la direction inverse pointant vers le compartiment moteur et donc l'avant du véhicule.

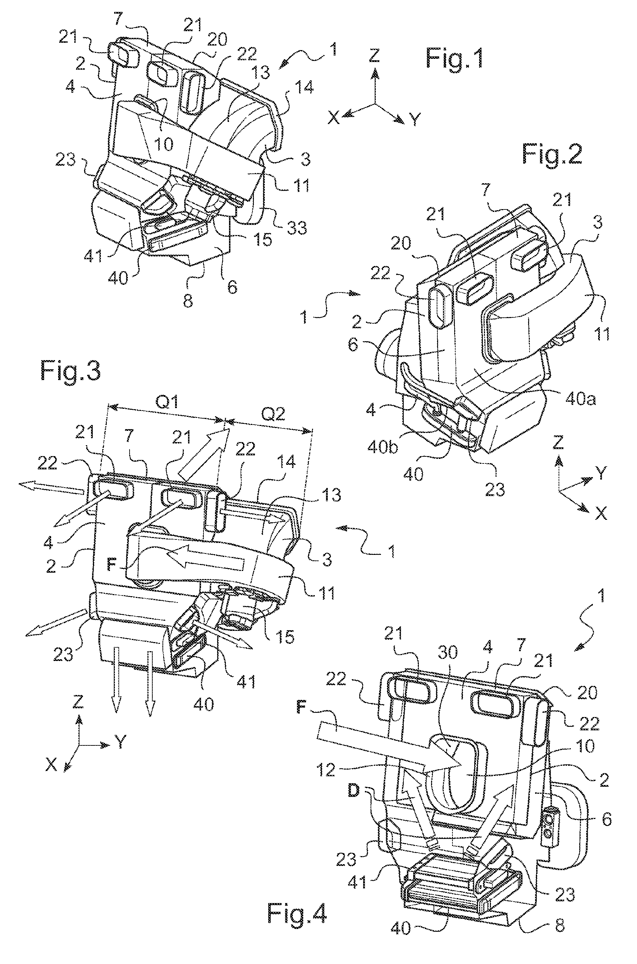

La figure 1 représente l'ensemble HVAC 1 constitué d'un carter 2 et d'un dispositif de pulseur 3 accolé latéralement au carter 2. Le carter 2 comprend une première face ou face avant 4 (tournée vers l'habitacle), une seconde face ou face arrière 5 (tournée vers le compartiment moteur), sensiblement verticales, et reliées par des faces latérales verticales 6, une face supérieure 7 et une face inférieure 8.

La face avant comporte en son centre une ouverture d'entrée d'air 10 à laquelle se raccorde le dispositif de pulseur 3 grâce à un tuyau de raccordement 11. L'ouverture 10 peut comporter une couronne 12 de raccordement au tuyau 11. Comme on le voit sur les figures 1 à 3, le dispositif pulseur 3, accolé au carter 2, à l'extérieur de celui-ci, comporte un tuyau d'amenée d'air 13 dont l'embouchure 14 est tournée vers l'arrière pour aspirer l'air venant de la boîte à eau située dans le compartiment moteur. Cet air est envoyé dans une turbine 15 disposée latéralement au carter 2 et de là est renvoyé par le tuyau 11 vers la face avant 2 du carter pour s'introduire par l'entrée 10, comme symbolisé par les flèches F des figures 3 à 6.

Les figures montrent aussi les sorties de distribution d'air, à savoir une sortie supérieure de désembuage 20 oblique tournée vers l'arrière et le pare-brise, deux sorties supérieures avant 21 et supérieures latérales 22 pour l'aération supérieure, et deux sorties inférieures pour les pieds des passages 23. La figure 3 illustre par des flèches sortantes les diverses sorties d'air possibles, étant entendu qu'elles ne sont généralement pas utilisées toutes en même temps mais que selon le choix fait par l'utilisateur grâce à des volets mobiles dans les canalisations, comme connu en soi.

L'entrée 10 donne dans un manchon central 30 qui traverse la moitié de l'épaisseur du carter 2 pour amener l'air à l'entrée d'une chambre arrière supérieure 31, l'entrée étant barrée par le panneau parallélépipédique de l'évaporateur 32 disposé sensiblement verticalement.

Sur le carter 2, à l'arrière de la chambre 31, se trouve la bride de fixation 33 du carter à la structure du véhicule.

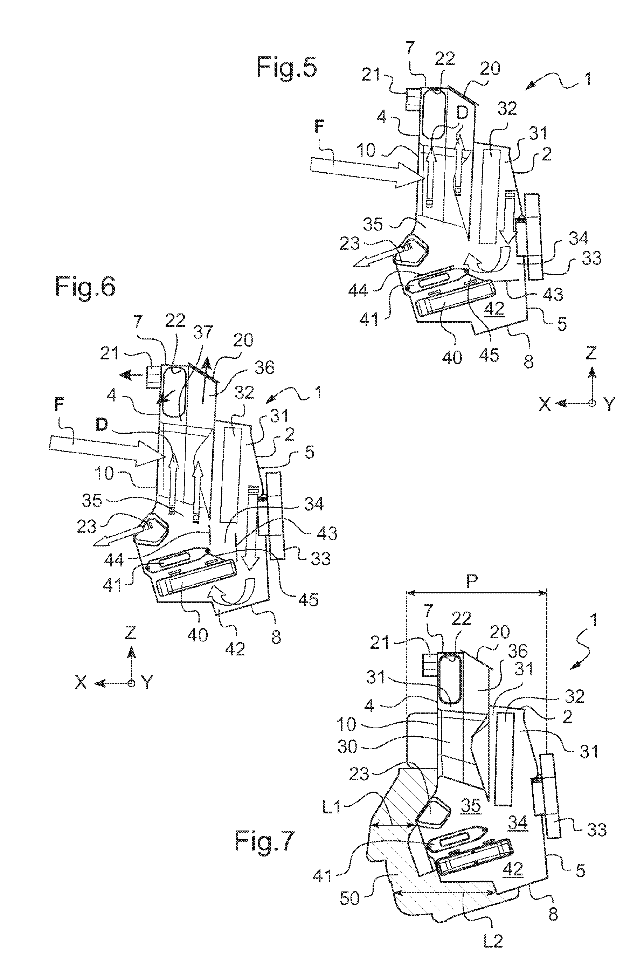

Dans le carter, la chambre verticale 31 communique à sa partie inférieure avec une chambre horizontale 34 susceptible de ramener l'air ayant descendu la chambre 31 vers la chambre avant 35 de l'ensemble HVAC en communication avec les sorties 23 ainsi qu'avec les sorties supérieures 20, 21, 22 grâce à des conduits verticaux doubles qui contournent latéralement le manchon traversant 30. Ces conduits sont d'une part doubles en ce qu'ils contournent l'entrée 10 comme symbolisé par les deux flèches D de la figure 4, et surtout en ce qu'il y a, dans l'épaisseur de l'ensemble, deux conduits distincts pour alimenter séparément les sorties supérieures 21, 22 d'une part, et 20 d'autre part, comme symbolisé par les flèches D des figures 5 ou 6.

En dessous des chambres 34, 35 se trouvent les organes de chauffage, à savoir les deux panneaux parallélépipédiques de l'échangeur de chaleur 40 et du radiateur électrique d'appoint 41, les deux panneaux étant empilés sensiblement horizontalement à l'aplomb du manchon central 30. L'échangeur de chaleur 40 est un aérotherme, c'est-à-dire un radiateur dans lequel circule de l'eau chauffée issue du fonctionnement du moteur (on voit sur la figure 2 les conduites 40a et 40b de circulation d'eau chauffée. Lors du démarrage, l'air chaud est produit par le radiateur électrique additionnel 41 à résistance à coefficient de température positif (CTP), qui fonctionne tant que l'aérotherme 40 n'a pas atteint ses performances et son rendement normal.

Une chambre inférieure 42 est formée sous les organes de chauffage, en communication avec la partie inférieure de la chambre 31, par l'intermédiaire d'un volet commandable 43 qui peut prendre une position ouverte (figure 6, circuit chaud) ou fermée (figure 5, circuit froid). Un second volet commandable 44 est placé au niveau de la communication entre la chambre 34 et la chambre 35, communication qu'il ferme (figure 6) ou qu'il ouvre (figure 5), auquel cas, c'est le passage par les organes de chauffage qui est fermé. Une paroi fixe 45 empêche l'air de s'échapper entre les deux organes de chauffage 40, 41.

Le fonctionnement de l'ensemble HVAC de l'invention est le suivant. L'air pulsé par le pulseur 3 arrive dans tous les cas par l'ouverture 10 dans la face avant de l'ensemble HVAC 1 et traverse l'évaporateur vertical 32 situé derrière pour pénétrer dans la chambre 31 et descendre vers le bas dans la chambre centrale arrière 34.

En cas d'utilisation en circuit froid, figure 5, le volet 43 ferme la communication au bas de la chambre 34 avec la chambre inférieure 42, tandis que le volet 44 laisse communiquer la chambre 34 avec la chambre centrale avant 35, d'où l'air froid peut d'échapper par l'une ou l'autre des sorties d'aérations choisies par l'utilisateur.

En cas d'utilisation en circuit chaud, figure 6, le volet 43 ouvre la communication au bas de la chambre 34 avec la chambre inférieure 42 et ferme celle directe avec la chambre 35, tandis que le volet 44 ferme également cette communication de la chambre 34 avec la chambre centrale avant 35. L'air froid ayant traversé l'évaporateur descend donc jusqu'à la chambre inférieure 42 et de là, traverse les deux organes de chauffage 40, 41 pour se réchauffer et parvenir dans la chambre centrale avant 35, d'où l'air froid peut d'échapper par l'une ou l'autre des sorties d'aérations choisies par l'utilisateur.

La figure 7 représente un schéma en coupe latérale de l'ensemble HVAC 1 conforme à l'invention, et la partie hachurée 50 montre le volume occupé par un ensemble HVAC traditionnel auquel l'ensemble de l'invention se substitue. On apprécie la place gagnée sur l'encombrement de l'ensemble traditionnel : on gagne environ L1 = 100 mm au niveau de la zone frontale et jusqu'à L2 = 200 mm en zone basse. Les dimensions de l'ensemble de l'invention sont de l'ordre de 300 mm pour la profondeur P (fig.7) et de l'ordre de 320 mm pour la largeur sans pulseur Q1, le pulseur ajoutant une surlargeur Q2 d'environ 200 mm (fig. 3).

Différentes modifications peuvent être apportées à l'ensemble qui vient d'être décrit. Par exemple, les conduits verticaux distincts 36 et 37 de désembuage et d'aération peuvent être regroupés en un seul conduit. De plus, la partie haute du groupe, au niveau des sorties de désembuage 20 et d'aération 21, 22, peut être raccourcie en intégrant ces sorties à la planche de bord, auquel cas il suffit de prévoir juste au-dessus de l'entrée 10 et du manchon 30, une sortie étanche sur le dessus du carter 2, pour se raccorder de manière étanche avec la planche de bord.

## Revendications

1. Ensemble de chauffage-ventilation-climatisation (1) pour véhicule automobile, comprenant un carter (2) formant un volume clos entre une première et une seconde faces opposées (4, 5) globalement verticales et destinées à être tournées respectivement du côté habitacle du véhicule et du côté moteur du véhicule, le carter (2) présentant au moins une ouverture d'entrée (10) pour un flux d'air et, sur ou autour de la première face (4), plusieurs sorties de distribution d'air (20, 21, 22, 23), des circulations d'air étant définies à l'intérieur du carter (2) entre l'ouverture d'entrée et les sorties, des clapets commandables (43, 44) étant interposés sur au moins certaines de ces circulations, le carter (2) abritant un évaporateur (32) situé sensiblement verticalement dans une circulation en aval de l'entrée (10), ainsi qu'au moins un organe de chauffage (40, 41) disposé dans une circulation en aval de l'évaporateur (32), un pulseur (3) étant prévu pour faire circuler l'air dans le carter (2), **caractérisé en ce que** :
- le pulseur (3) est accolé latéralement au carter (2), raccordable à une source d'air et relié à l'ouverture d'entrée (10) du carter de façon à envoyer un flux d'air dans le carter (2), l'ouverture d'entrée (10) étant placée sur la première face (4) du carter (2) en partie centrale,
- l'évaporateur (32) est logé dans le carter derrière l'ouverture d'entrée (10) et lui est relié par un manchon (30) traversant partiellement le carter (2), une chambre arrière (31) de circulation d'air étant formée à l'arrière de l'évaporateur (32) entre ce-dernier et la seconde face (5) du carter (2),
- l'organe de chauffage (40, 41) est disposé sensiblement à plat au bas du carter (2), à l'aplomb du manchon (30) et/ou de l'évaporateur (31), une chambre (42) étant formée sous l'organe de chauffage (40, 41) et communiquant avec la chambre arrière (31) de circulation par un premier passage arrière qui peut être fermé par un premier clapet commandable (43),
- une chambre de mixage et de distribution (35) est formée sous le manchon traversant (30) et au-dessus de l'organe de chauffage (40, 41), en communication avec les sorties de distribution d'air (20, 21, 22, 23), et communiquant avec la chambre arrière (31) de circulation par un second passage arrière qui peut être fermé par un second clapet commandable (44).

2. Ensemble selon la revendication 1, **caractérisé en ce que** la chambre de mixage et de distribution (35) communique avec des sorties supérieures de distribution d'air (20, 21, 22) par des passages d'air verticaux (36, 37) formés de part et d'autre dudit manchon (30).

3. Ensemble selon la revendication 1, **caractérisé en ce que** lesdits passages d'air verticaux (36, 37) sont doublés pour desservir de manière distincte des sorties supérieures d'aération (21, 22) et une sortie de désembuage (20).

4. Ensemble selon l'une quelconque des revendications 1 à 3, **caractérisé en ce que** le pulseur (3), disposé latéralement, est relié à l'ouverture d'entrée (10) du carter par un tuyau (11), de préférence par un tuyau plat.

5. Ensemble selon l'une quelconque des revendications 1 à 4, **caractérisé en ce que** les organes de chauffage comprennent un aérotherme (40) et un radiateur d'appoint (41).

6. Ensemble selon la revendication 5, **caractérisé en ce que** l'aérotherme (40) et le radiateur d'appoint (41) sont empilés l'un sur l'autre.

## Patentansprüche

1. Heiz-Lüftungs-Klima-Baugruppe (1) für ein Kraftfahrzeug, aufweisend ein Gehäuse (2) welches ein geschlossenes Volumen zwischen einer ersten und einer zweiten Fläche (4, 5) bildet, welche sich gegenüber liegen, im Allgemeinen vertikal verlaufen und dafür vorgesehen sind, jeweils der Seite der Fahrgastzelle des Fahrzeugs und der Seite des Motors des Fahrzeugs zugewandt zu sein, wobei das Gehäuse (2) mindestens eine Eintrittsöffnung (10) für einen Luftstrom und an der oder um die erste Fläche (4) herum mehrere Austritte zur Luftverteilung (20, 21, 22, 23) aufweist, wobei Luftzirkulationen im Inneren des Gehäuses (2) zwischen der Eintrittsöffnung und den Austritten definiert sind, wobei steuerbare Klappen (43, 44) an zumindest bestimmten dieser Zirkulationen eingebracht sind, wobei das Gehäuse (2) einen Verdampfer (32), welcher sich im Wesentlichen senkrecht in einer Zirkulation stromabwärts des Eintritts (10) befindet, sowie mindestens ein Heizorgan (40, 41) aufnimmt, welches in einer Zirkulation stromabwärts des Verdampfers (32) angeordnet ist, wobei ein Gebläse (3) vorgesehen ist, um die Luft in dem Gehäuse (2) zirkulieren zu lassen, **dadurch gekennzeichnet, dass**:
- das Gebläse (3) seitlich am Gehäuse (2) angebunden ist, an eine Luftquelle verbindbar ist und mit der Eintrittsöffnung (10) des Gehäuses derartig verbunden ist, dass ein Luftstrom in das Gehäuse (2) eingebracht wird, wobei die Eintrittsöffnung (10) an der ersten Fläche (4) des Gehäuses (2) im zentralen Teil angeordnet ist,
- der Verdampfer (32) in dem Gehäuse hinter der Eintrittsöffnung (10) untergebracht ist und durch eine Muffe (30), welche das Gehäuse (2) teilweise durchdringt, verbunden ist, wobei eine hintere Kammer (31) zur Luftzirkulation am hinteren Ende des Verdampfers (32) zwischen diesem und der zweiten Fläche (5) des Gehäuses (2) ausgebildet ist,
- das Heizorgan (40, 41) flach am unteren Teil des Gehäuses (2) im Lot der Muffe (30) und/oder des Verdampfers (31) angeordnet ist, wobei eine Kammer (42) unter dem Heizorgan (40, 41) ausgebildet ist und mit der hinteren Zirkulationskammer (31) durch einen ersten hinteren Kanal kommuniziert, welcher durch eine erste steuerbare Klappe (43) geschlossen werden kann,
- eine Kammer zum Mischen und zur Verteilung (35) unter der durchdringenden Muffe (30) und oberhalb des Heizorgans (40, 41) ausgebildet ist, welche mit den Austritten zur Luftverteilung (20, 21, 22, 23) kommuniziert und mit der hinteren Zirkulationskammer (31) durch einen zweiten hinteren Kanal kommuniziert, welcher durch eine zweite steuerbare Klappe (44) geschlossen werden kann.

2. Baugruppe nach Anspruch 1, **dadurch gekennzeichnet, dass** die Kammer zum Mischen und zur Verteilung (35) mit oberen Austritten zur Luftverteilung (20, 21, 22) über senkrechte Luftkanäle (36, 37) kommuniziert, welche beiderseits der Muffe (30) ausgebildet sind.

3. Baugruppe nach Anspruch 1, **dadurch gekennzeichnet, dass** die senkrechten Luftkanäle (36, 37) verdoppelt sind, um obere Belüftungsaustritte (21, 22) und einen Defrosteraustritt (20) in getrennter Weise zu versorgen.

4. Baugruppe nach einem der Ansprüche 1 bis 3, **dadurch gekennzeichnet, dass** das seitlich angeordnete Gebläse (3) mit der Eintrittsöffnung (10) des Gehäuses über einen Schlauch (11), vorzugsweise über einen flachen Schlauch, verbunden ist.

5. Baugruppe nach einem der Ansprüche 1 bis 4, **dadurch gekennzeichnet, dass** die Heizorgane einen Lufterhitzer (40) und einen Zusatzradiator (41) aufweisen.

6. Baugruppe nach Anspruch 5, **dadurch gekennzeichnet, dass** der Lufterhitzer (40) und der Zusatzradiator (41) übereinander gestapelt sind.

## Claims

1. Heating-ventilation-air-conditioning unit (1) for motor vehicles, comprising a casing (2) forming a closed volume between opposite globally vertical first and second faces (4, 5) intended to face toward the passenger compartment of the vehicle and the engine compartment of the vehicle, respectively, the casing (2) having at least one inlet opening (10) for a flow of air and, on or around the first face (4), a plurality of air distribution outlets (20, 21, 22, 23), air flows being defined inside the casing (2) between the inlet opening and the outlets, valves (43, 44) being disposed on at least some of these flows, the casing (2) accommodating an evaporator (32) situated substantially vertically in a flow downstream of the inlet (10), and at least one heating member (40, 41) disposed in a flow downstream of the evaporator (32), a pulser (3) being provided to circulate the air in the casing (2), **characterized in that**:
- the pulser (3) is laterally against the casing (2), connectable to a source of air and connected to the inlet opening (10) of the casing so as to direct a flow of air into the casing (2), the inlet opening (10) being on the first face (4) of the casing (2) in the central part,
- the evaporator (32) is housed in the casing behind the inlet opening (10) and is connected to it by a sleeve (30) partially crossing the casing (2), a rear air circulation chamber (31) being formed to the rear of the evaporator (32) between the latter and the second face (5) of the casing (2),
- the heating member (40, 41) is disposed substantially flat at the bottom of the casing (2), vertically in line with the sleeve (30) and/or the evaporator (31), a chamber (42) being formed under the heating member (40, 41) and communicating with the rear circulation chamber (31) via a first rear passage that can be closed by a first valve (43),
- a mixing and distribution chamber (35) is formed under the sleeve (30) and above the heating member (40, 41), in communication with the air distribution outlets (20, 21, 22, 23) and communicating with the rear circulation chamber (31) via a second rear passage that can be closed by a second valve (44).

2. Unit according to Claim 1, **characterized in that** the mixing and distribution chamber (35) communicates with upper air distribution outlets (20, 21, 22) via vertical air passages (36, 37) formed on either side of said sleeve (30).

3. Unit according to Claim 1, **characterized in that** said vertical air passages (36, 37) are duplicated to serve separately upper ventilation outlets (21, 22) and a demisting outlet (20).

4. Unit according to any one of Claims 1 to 3, **characterized in that** the pulser (3), disposed laterally, is connected to the inlet opening (10) of the casing by a pipe (11), preferably a flat pipe.

5. Unit according to any one of Claims 1 to 4, **characterized in that** the heating members comprise an air heater (40) and a top-up radiator (41).

6. Unit according to Claim 5, **characterized in that** the air heater (40) and the top-up radiator (41) are stacked one on the other.
